(19) Europäisches Patentamt
European Patent Office
Office européen des brevets

(11) EP 3 176 220 B1

(12) **EUROPEAN PATENT SPECIFICATION**

(45) Date of publication and mention of the grant of the patent:
**08.05.2019 Bulletin 2019/19**

(21) Application number: **15828067.7**

(22) Date of filing: **22.07.2015**

(51) Int Cl.:
***C08L 83/07*** *(2006.01)* ***C08K 3/04*** *(2006.01)*
***C08K 3/22*** *(2006.01)* ***C08K 5/13*** *(2006.01)*
***C08L 83/04*** *(2006.01)* ***C08L 83/05*** *(2006.01)*
***C09K 5/14*** *(2006.01)*

(86) International application number:
**PCT/JP2015/070800**

(87) International publication number:
**WO 2016/017495 (04.02.2016 Gazette 2016/05)**

(54) **THERMALLY CONDUCTIVE SILICONE COMPOSITION, AND THERMALLY CONDUCTIVE SILICONE MOULDED ARTICLE**

WÄRMELEITFÄHIGE SILIKONZUSAMMENSETZUNG UND THERMISCH LEITFÄHIGER SILIKONFORMARTIKEL

COMPOSITION DE SILICONE THERMIQUEMENT CONDUCTRICE, ET ARTICLE MOULÉ EN SILICONE THERMIQUEMENT CONDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2014 JP 2014152755**

(43) Date of publication of application:
**07.06.2017 Bulletin 2017/23**

(73) Proprietor: **Shin-Etsu Chemical Co., Ltd.**
**Tokyo 100-0004 (JP)**

(72) Inventors:
- **ITO, Takanori**
**Annaka-shi**
**Gunma 379-0224 (JP)**
- **ENDO, Akihiro**
**Annaka-shi**
**Gunma 379-0224 (JP)**
- **ISHIHARA, Yasuhisa**
**Annaka-shi**
**Gunma 379-0224 (JP)**

(74) Representative: **Ter Meer Steinmeister & Partner Patentanwälte mbB**
**Nymphenburger Straße 4**
**80335 München (DE)**

(56) References cited:
**WO-A1-2013/000788**
**WO-A1-2013/081794**
**JP-A- H0 711 010**
**JP-A- 2003 261 769**
**JP-A- 2004 331 962**
**JP-A- 2006 350 194**
**JP-A- 2011 016 923**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 176 220 B1

## Description

### TECHNICAL FIELD

This invention relates to a thermally conductive silicone composition which cures into a cured product that is useful as a heat transfer material which is interposed at the interface between a heat-generating electronic part and a heat-dissipating member such as a heat sink or circuit board for cooling the electronic part via heat transfer, and a thermally conductive silicone molded article using the composition.

### BACKGROUND ART

Since the advance of electronic equipment such as personal computers toward high integration density has brought about an increase in the heat release of integrated circuit elements such as LSI and CPU in the equipment, conventional cooling systems are insufficient in some cases. Especially in the case of personal computers of portable laptop type where only a narrow space is available inside the equipment, it is impossible to mount a large-size heat sink or cooling fan. Also while CPUs of BGA type are used in the personal computers of laptop type, they have a low profile and a high heat release as compared with other elements, indicating that the cooling system therefor must be fully considered.

Thus, there is a need for a low hardness, high thermal conductivity material capable of filling in any gap defined between elements of different height. To solve the problem, a thermally conductive sheet having a high thermal conductivity and a sufficient flexibility to conform to any gaps is needed. Also, as the driving frequency increases annually and the CPU performance improves, the heat release increases. Thus, there is a need for a thermally conductive sheet having a higher thermal conductivity.

Under the circumstances, the thermally conductive sheet is required to have a high thermal conductivity and a low hardness for the purpose of improving adhesion to elements and heat sinks. There are used thermally conductive sheets having a low hardness corresponding to 20 or less in Asker C hardness. Since the low hardness thermally conductive sheets can mitigate stresses, they can establish tight adhesion to heat-generating parts and heat-dissipating members, and allow for reduction of thermal resistance and application to stepped structures. However, these sheets are disadvantageous in that because of poor recovery, once deformed, they do not resume the original shape, and they are difficult in subsequent shaping such as cutting, and awkward to handle during attachment and to rework. On the other hand, with the target of improving handling and reworkability, the hardness of thermally conductive sheets must be increased. There is an ambivalent relationship between low hardness and handling/reworking.

Thus, JP-A 2011-16923 (Patent Document 1) discloses a heat-dissipating sheet having a low hardness and good reworkability that overcomes the above problem by prescribing the ratio in average degree of polymerization of an organopolysiloxane having 2 to 9 silicon-bonded alkenyl groups in side chains to an organohydrogenpolysiloxane.

As more electronic control systems are recently employed on automobiles like EV and HV, those areas where vehicle-mount parts need a thermal countermeasure become more. For the heat-dissipating sheet used in that area, in addition to low hardness and reworkability, long-term recovery is considered important in order that its adhesion to the substrate may not be degraded upon application of vibration and heat. The heat-dissipating sheet of Patent Document 1, however, substantially loses its recovery during long-term aging, indicating that its performance is insufficient for the heat dissipation of vehicle-mounted parts.

On the other hand, blending of organic or inorganic antioxidants is known as the method for improving the heat resistance of silicone (JP-A H11-60955 (Patent Document 2), JP-A 2000-212444 (Patent Document 3), and JP-A 2002-179917 (Patent Document 4)).

In the case of thermally conductive heat-dissipating sheets loaded with thermally conductive fillers, mere addition of these antioxidants fails to acquire sufficient reworkability and recovery, and it is necessary to increase the hardness of the sheet, or to reduce the amount of thermally conductive filler and increase the amount of resin. However, the former sacrifices the satisfactory compressibility due to a low hardness, and the latter is difficult to gain a sufficient thermal conductivity for the heat-dissipating application.

### PRIOR ART DOCUMENTS

### PATENT DOCUMENTS

Patent Document 1: JP-A 2011-16923
Patent Document 2: JP-A H11-60955

Patent Document 3: JP-A 2000-212444
Patent Document 4: JP-A 2002-179917

## SUMMARY OF THE INVENTION

## PROBLEMS TO BE SOLVED BY THE INVENTION

An object of the invention, which has been made under the above circumstances, is to provide a thermally conductive silicone composition which is improved in reworkability and long-term recovery despite a low hardness, and a thermally conductive silicone molded article obtained by molding the composition into a sheet.

## MEANS FOR SOLVING THE PROBLEMS

Making extensive investigations to attain the above object, the inventors have found that a thermally conductive silicone composition comprising an organopolysiloxane having 2 to 9 silicon-bonded alkenyl groups in molecular side chains and an organohydrogenpolysiloxane, with the ratio in average degree of polymerization therebetween falling in a specific range, and further comprising an antioxidant may become a thermally conductive silicone molded article in sheet form which is improved in reworkability and long-term recovery despite a low hardness. That is, the molded article displays long-term recovery without sacrificing the high thermal conductivity due to heavy loading of filler and the satisfactory compressibility due to a low hardness. The invention is predicated on this finding.
Accordingly, the invention provides a thermally conductive silicone composition and a thermally conductive silicone molded article, as defined below.

[1] A thermally conductive silicone composition comprising:

(a) 100 parts by weight of an organopolysiloxane having silicon-bonded alkenyl groups in at least molecular side chains, the number of alkenyl groups in molecular side chains being 2 to 9,
(b) an organohydrogenpolysiloxane which is blocked on at least both ends with a silicon-bonded hydrogen atom, in such an amount that the molar amount of silicon-bonded hydrogen atoms in component (b) is 0.1 to 2.0 times the molar amount of alkenyl groups in component (a),
(c) 200 to 2,500 parts by weight of a thermally conductive filler,
(d) a platinum group metal-based curing catalyst in such an amount as to give 0.1 to 1,000 ppm of platinum group metal based on the weight of component (a), and
(e) 0.1 to 10 parts by weight of an antioxidant which is an organic antioxidant and/or an inorganic antioxidant,

the composition meeting L'/L = 0.6 to 2.3 wherein L represents the average number of siloxane bonds between the silicon atoms having alkenyl groups directly bonded thereto in molecular side chains in the organopolysiloxane as component (a), and L' represents the average degree of polymerization of the organohydrogenpolysiloxane as component (b).
[2] The thermally conductive silicone composition of [1] wherein the organic antioxidant is an antioxidant having a hindered phenol skeleton.
[3] The thermally conductive silicone composition of [2] wherein the antioxidant having a hindered phenol skeleton is a compound having a molecular weight of at least 500.
[4] The thermally conductive silicone composition of [1] wherein the inorganic antioxidant is selected from the group consisting of cerium oxide, cerium oxide/zirconia solid solution, cerium hydroxide, carbon, carbon nanotubes, titanium oxide, and fullerene.
[5] The thermally conductive silicone composition of any one of [1] to [4] wherein component (a) is an organopolysiloxane having the general formula (1):

[Chemical Formula 1]

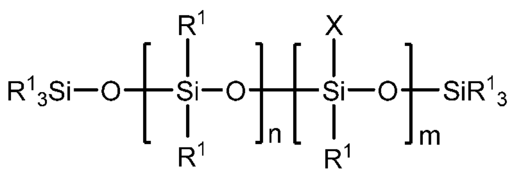

(1)

wherein $R^1$ is independently a substituted or unsubstituted monovalent hydrocarbon group free of aliphatic unsaturation, X is an alkenyl group, n is 0 or an integer of at least 1, and m is an integer of 2 to 9.

[6] The thermally conductive silicone composition of any one of [1] to [5] wherein component (b) is an organohydrogenpolysiloxane having the average structural formula (2):

[Chemical Formula 2]

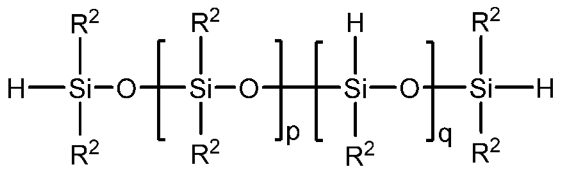

(2)

wherein $R^2$ is independently a substituted or unsubstituted monovalent hydrocarbon group free of aliphatic unsaturation, p is a positive number of at least 0, and q is a positive number of 0 to less than 2.

[7] The thermally conductive silicone composition of any one of [1] to [6], further comprising (f) 0.1 to 40 parts by weight of a dimethylpolysiloxane which is blocked at a single end with a trialkoxysilyl group, per 100 parts by weight of component (a).

[8] The thermally conductive silicone composition of any one of [1] to [7] which cures into a cured product having a thermal conductivity of at least 1.0 W/m·K.

[9] A thermally conductive silicone molded article obtained by molding the composition of any one of [1] to [8] into a sheet.

[10] The thermally conductive silicone molded article of [9] which is obtained from secondary curing of the silicone article molded into a sheet.

[11] The thermally conductive silicone molded article of [9] or [10], having a hardness of up to 30 on Asker C hardness meter.

## ADVANTAGEOUS EFFECTS OF THE INVENTION

A thermally conductive silicone molded article obtained by molding a thermally conductive silicone composition according to the invention into a sheet may deform in conformity with the shape of a member to be heat dissipated due to a low hardness, exhibits satisfactory heat dissipating properties without applying any stress to the member, is good to handle and rework, and is improved in long-term recovery which is required in the vehicle-mounted part application.

## EMBODIMENT FOR CARRYING OUT THE INVENTION

Now the invention is described in detail.

[(a) Organopolysiloxane]

Component (a) is an alkenyl-containing organopolysiloxane which is an organopolysiloxane having silicon-bonded alkenyl groups in at least molecular side chains, the number of alkenyl groups in molecular side chains being 2 to 9. Typically, it is a linear organopolysiloxane having a backbone composed essentially of repeating diorganosiloxane units and blocked with a triorganosiloxy group at both ends of the molecular chain, and having a molecular structure which may in part contain a branched structure or be cyclic. A linear diorganopolysiloxane is preferred from the standpoint of physical properties of the cured product including mechanical strength.

Component (a) preferably has an average degree of polymerization (DOP) of 10 to 10,000, more preferably 50 to 2,000. If the average DOP is too low, the sheet may become hard and substantially lose compressibility. If the average DOP is too high, the sheet may have a low strength and lose recovery. Typically the average DOP may be determined versus polystyrene standards by gel permeation chromatography (GPC) analysis using tetrahydrofuran (THF) as developing solvent.

Preferred as component (a) is an organopolysiloxane having the general formula (1).

[Chemical Formula 3]

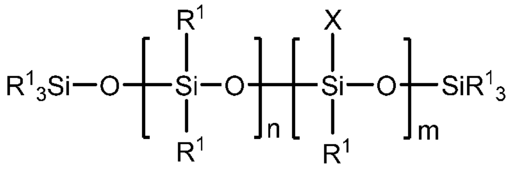 (1)

Herein $R^1$ is independently a substituted or unsubstituted monovalent hydrocarbon group free of aliphatic unsaturation, X is an alkenyl group, n is 0 or an integer of at least 1, and m is an integer of 2 to 9.

In formula (1), the substituted or unsubstituted monovalent hydrocarbon group free of aliphatic unsaturation, represented by $R^1$, is preferably of 1 to 12 carbon atoms, examples of which include alkyl groups such as methyl, ethyl, propyl, isopropyl, butyl, isobutyl, tert-butyl, pentyl, neopentyl, hexyl, heptyl, octyl, nonyl, decyl and dodecyl; cycloalkyl groups such as cyclopentyl, cyclohexyl and cycloheptyl; aryl groups such as phenyl, tolyl, xylyl, naphthyl and biphenylyl; aralkyl groups such as benzyl, phenylethyl, phenylpropyl and methylbenzyl; and substituted form of the foregoing groups in which some or even all of carbon-bonded hydrogen atoms are substituted by halogen atoms such as fluorine, chlorine or bromine, cyano groups or the like, such as chloromethyl, 2-bromoethyl, 3-chloropropyl, 3,3,3-trifluoropropyl, chlorophenyl, fluorophenyl, cyanoethyl, and 3,3,4,4,5,5,6,6,6-nonafluorohexyl. Those groups of 1 to 10 carbon atoms are preferred, especially of 1 to 6 carbon atoms, and substituted or unsubstituted alkyl groups of 1 to 3 carbon atoms such as methyl, ethyl, propyl, chloromethyl, bromoethyl, 3,3,3-trifluoropropyl and cyanoethyl and substituted or unsubstituted phenyl groups such as phenyl, chlorophenyl and fluorophenyl are more preferred. It is unnecessary that all groups $R^1$ be the same, that is, $R^1$ may be the same or different.

In formula (1), the alkenyl group represented by X is typically of 2 to 8 carbon atoms, examples including vinyl, allyl, propenyl, isopropenyl, butenyl, hexenyl, and cyclohexenyl. Inter alia, lower alkenyl groups of 2 to 5 carbon atoms such as vinyl and allyl are preferred, with vinyl being most preferred.

In formula (1), n is 0 or an integer of at least 1, preferably an integer of 5 to 9,000, and m is an integer of 2 to 9. Preferably, n and m are integers meeting $10 \leq n+m \leq 10,000$, more preferably integers meeting $50 \leq n+m \leq 2,000$, and even more preferably integers meeting $100 \leq n+m \leq 500$, and further preferably integers meeting $0 < m/(n+m) \leq 0.05$.

[(b) Organohydrogenpolysiloxane]

Component (b) is an organohydrogenpolysiloxane which is blocked on at least both ends with a silicon-bonded hydrogen atom, preferably having on average 1 to 4 silicon-bonded hydrogen atoms (i.e., Si-H groups) per molecule, with the hydrogen atoms being directly bonded to at least the silicon atoms at both ends. If the number of Si-H groups is less than 1, no cure occurs.

Component (b) preferably has an average degree of polymerization (DOP) of 2 to 300, more preferably 10 to 150. If the average DOP is too low, the sheet may become hard and lose compressibility. If the average DOP is too high, the sheet may have a low strength and lose recovery. Typically the average DOP may be determined versus polystyrene standards by GPC analysis using THF as developing solvent.

Component (b) is preferably an organohydrogenpolysiloxane having the average structural formula (2).

[Chemical Formula 4]

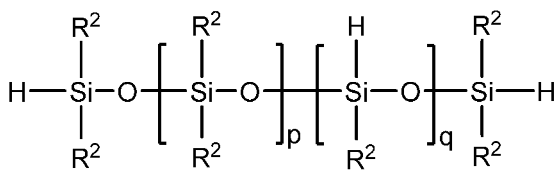 (2)

Herein $R^2$ is independently a substituted or unsubstituted monovalent hydrocarbon group free of aliphatic unsaturation, p is a positive number of at least 0, and q is a positive number of 0 to less than 2.

In formula (2), the substituted or unsubstituted monovalent hydrocarbon group free of aliphatic unsaturation, represented by $R^2$, is preferably of 1 to 12 carbon atoms, examples of which include alkyl groups such as methyl, ethyl, propyl, isopropyl, butyl, isobutyl, tert-butyl, pentyl, neopentyl, hexyl, heptyl, octyl, nonyl, decyl and dodecyl; cycloalkyl

groups such as cyclopentyl, cyclohexyl and cycloheptyl; aryl groups such as phenyl, tolyl, xylyl, naphthyl and biphenylyl; aralkyl groups such as benzyl, phenylethyl, phenylpropyl and methylbenzyl; and substituted form of the foregoing groups in which some or even all of carbon-bonded hydrogen atoms are substituted by halogen atoms such as fluorine, chlorine or bromine, cyano groups or the like, such as chloromethyl, 2-bromoethyl, 3-chloropropyl, 3,3,3-trifluoropropyl, chlorophenyl, fluorophenyl, cyanoethyl, and 3,3,4,4,5,5,6,6,6-nonafluorohexyl. Those groups of 1 to 10 carbon atoms are preferred, especially of 1 to 6 carbon atoms, and substituted or unsubstituted alkyl groups of 1 to 3 carbon atoms such as methyl, ethyl, propyl, chloromethyl, bromoethyl, 3,3,3-trifluoropropyl and cyanoethyl and substituted or unsubstituted phenyl groups such as phenyl, chlorophenyl and fluorophenyl are more preferred. It is unnecessary that all groups $R^2$ be the same, that is, $R^2$ may be the same or different.

In formula (2), p is a positive number of at least 0, preferably 2 to 100, and q is a positive number of 0 to less than 2, preferably 0 to 1. Also, p and q are integers meeting $2 \le p+q \le 101$, preferably integers meeting $2 \le p+q \le 80$, more preferably integers meeting $2 \le p+q \le 50$, and even more preferably integers meeting $2 \le p+q \le 30$.

These values indicate values in the average structural formula of component (b) while values on the individual molecule level are not limited.

Component (b) is added in such an amount that the molar amount of Si-H groups in component (b) per mole of alkenyl groups in component (a) (i.e., Si-H/Si-Vi) is 0.1 to 2.0 moles, desirably 0.3 to 1.0 mole. If the amount of Si-H groups in component (b) is less than 0.1 mole or more than 2.0 moles per mole of alkenyl groups in component (a), then a molded article of the desired low hardness is not obtainable.

The inventive composition should meet L'/L = 0.6 to 2.3, preferably 0.7 to 1.7, and more preferably 0.8 to 1.4 wherein L represents the average number of siloxane bonds between the silicon atoms having alkenyl groups directly bonded thereto in molecular side chains in the alkenyl-containing organopolysiloxane as component (a), and L' represents the average DOP of the organohydrogenpolysiloxane as component (b). If L'/L is less than 0.6 or more than 2.3, then the average crosslinked structure becomes non-uniform, failing to provide good recovery. Understandably, the ratio L'/L represents the uniformity of crosslinked structure in the cured product of the inventive composition and becomes an index of recovery that the molded article of the inventive composition possesses.

It is noted that the average number L of siloxane bonds between the silicon atoms having alkenyl groups bonded thereto in side chains in component (a) may be determined by the following procedure, for example. It is assumed that component (a) is an organopolysiloxane consisting of siloxane units M at both ends and siloxane units D1 to Dx of x types at non-terminal locations, and N is the number of silicon atoms having alkenyl groups bonded thereto in side chains in component (a). On analysis of component (a) by $^{29}$Si-NMR, provided that the integrated area of a peak assigned to the silicon atom in units M at both ends is equal to 2, the integrated areas S1 to Sx of peaks assigned to the silicon atom in units D1 to Dx as side chain segments are determined. Consequently, component (a) is represented by the average structural formula:

$$M\text{-}D1_{S1}\text{-}D2_{S2}\text{-}\ \cdots\ \text{-}Dx_{Sx}\text{-}M\ .$$

Then L is determined from the equation:

$$L = (S1+S2+\ \cdots\ +Sx)/(N+1)\ .$$

L represents the number of siloxane bonds between the silicon atoms having alkenyl groups directly bonded thereto in side chain segments in the average structure given under the assumption that silicon atoms having alkenyl groups directly bonded thereto in side chain segments are distributed in the molecule of component (a) without bias. The value of L corresponds to the average number of oxygen atoms between the silicon atoms having alkenyl groups bonded thereto in side chain segments.

Specifically, for example, component (a) is a trimethylsiloxy-blocked dimethylsiloxane-methylalkenylsiloxane copolymer. On analysis of this component (a) by $^{29}$Si-NMR, a peak 1 assigned to the silicon atom in trimethylsiloxy group at the end is detected in proximity to 8 ppm, a peak 2 assigned to the silicon atom in the dimethylsiloxane unit is detected in proximity to -22 ppm, and a peak 3 assigned to the silicon atom in the methylalkenylsiloxane unit is detected in proximity to -36 ppm. Provided that the integrated area of peak 1 is equal to 2, and the integrated areas of peaks 2 and 3 are represented by t and u, respectively, component (a) is represented by the average structural formula:

[Chemical Formula 5]

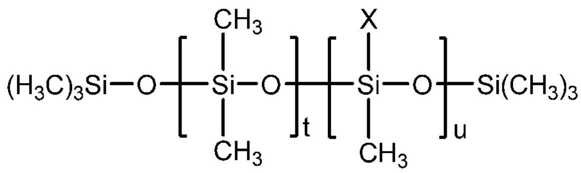

wherein X is an alkenyl group. Then L is determined from the equation:

$$L = (t+u)/(u+1) .$$

On the other hand, the average DOP L' of component (b) may be determined by the following procedure, for example. It is assumed that component (b) is an organohydrogenpolysiloxane consisting of siloxane units M' at both ends and siloxane units D'1 to D'x of x types at non-terminal locations. On analysis of component (b) by $^{29}$Si-NMR, provided that the integrated area of a peak assigned to the silicon atom in units M' at both ends is equal to 2, the integrated areas S'1 to S'x of peaks assigned to the silicon atom in units D'1 to D'x in non-terminal segments are determined. Consequently, component (b) is represented by the average structural formula:

$$M'\text{-}D'1_{S'1}\text{-}D'2_{S'2}\text{-} \cdots \text{-}D'x_{S'x}\text{-}M' .$$

Then the average DOP L' of component (b) is determined from the equation:

$$L' = S'1+S'2+ \cdots +S'x .$$

Specifically, for example, component (b) is a dimethylhydrogensiloxy-blocked dimethylpolysiloxane. On analysis of this component (b) by $^{29}$Si-NMR, a peak 1' assigned to the silicon atom in dimethylhydrogensiloxy group at the end is detected in proximity to -8 ppm, and a peak 2' assigned to the silicon atom in the dimethylsiloxane unit is detected in proximity to -22 ppm. Provided that the integrated area of peak 1' is equal to 2, and the integrated area of peak 2' is represented by t', component (b) is represented by the average structural formula:

[Chemical Formula 6]

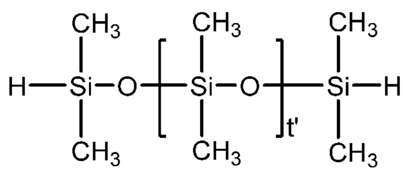

and L' is given by the equation:

$$L' = t' .$$

[(c) Thermally conductive filler]

Component (c) is a thermally conductive filler. Use may be made of any substances commonly known as thermally conductive fillers including metals such as non-magnetic copper and aluminum, metal oxides such as alumina, silica, magnesia, red iron oxide, beryllia, titania, and zirconia, metal nitrides such as aluminum nitride, silicon nitride, and boron nitride, metal hydroxides such as magnesium hydroxide, artificial diamond, and silicon carbide. Inter alia, aluminum oxide, aluminum hydroxide, boron nitride and aluminum nitride are preferred in that heat-dissipating sheets with high recovery are obtainable.

The thermally conductive filler should preferably have an average particle size of 0.1 to 150 μm, more preferably

0.5 to 100 μm. If the average particle size is too small, then the composition tends to build up its viscosity and may become difficult to mold. If the average particle size is too large, then the mixer vessel may be more abraded. It is also possible to use particles of two or more types having different average particle size. Provided that the volume distribution of particles is measured by means of a Microtrac instrument (laser diffraction scattering method), and the distribution is divided into two fractions at the boundary of average particle size, the average particle size used herein corresponds to the diameter at which the larger fraction and the smaller fraction are equal. It is noted that the average particle size referred to throughout the specification is always defined by the above context.

Component (c) should be added in an amount of 200 to 2,500 parts by weight, preferably 300 to 1,500 parts by weight per 100 parts by weight of component (a). If the amount of component (c) added is less than 200 parts by weight, the resulting composition has a poor thermal conductivity and lacks storage stability. If the amount exceeds 2,500 parts by weight, the resulting composition lacks extensibility and provides a molded article having low strength and poor recovery.

[(d) Platinum group metal-based curing catalyst]

Component (d) is a platinum group metal-based curing catalyst, which is to promote addition reaction between alkenyl groups in component (a) and Si-H groups in component (b). A choice may be made of those catalysts known useful in hydrosilylation reaction. Exemplary catalysts include elemental platinum group metals such as platinum (inclusive of platinum black), rhodium and palladium; platinum chloride, chloroplatinic acid and chloroplatinic acid salts such as $H_2PtCl_4 \cdot yH_2O$, $H_2PtCl_6 \cdot yH_2O$, $NaHPtCl_6 \cdot yH_2O$, $KHPtCl_6 \cdot yH_2O$, $Na_2PtCl_6 \cdot yH_2O$, $K_2PtCl_4 \cdot yH_2O$, $PtCl_4 \cdot yH_2O$, $PtCl_2$ and $Na_2HPtCl_4 \cdot yH_2O$ wherein y is an integer of 0 to 6, preferably 0 or 6; alcohol-modified chloroplatinic acid (see USP 3,220,972); complexes of chloroplatinic acid with olefins (see USP 3,159,601, 3,159,662 and 3,775,452); platinum group metals such as platinum black and palladium on carriers such as alumina, silica and carbon; rhodium-olefin complexes; chlorotris(triphenylphosphine)rhodium (known as Wilkinson catalyst); and complexes of platinum chloride, chloroplatinic acid or chloroplatinic acid salts with vinyl-containing siloxanes, especially vinyl-containing cyclic siloxanes.

Component (d) may be used in a so-called catalytic amount, typically in an amount of about 0.1 to 1,000 ppm, especially about 1.0 to 500 ppm of platinum group metal based on the weight of component (a).

[(e) Antioxidant]

Component (e) is an antioxidant which is an organic antioxidant or inorganic antioxidant.

As the organic antioxidant, hindered phenol base antioxidants having a hindered phenol skeleton may be used, such as IRGANOX 1330 and IRGANOX 3114 by BASF and AO-60G by Adeka Corp. Phosphorus and sulfur base organic antioxidants are undesirable because of their cure inhibitory ability. Of the organic antioxidants, especially hindered phenol base antioxidants, those having a molecular weight which is as high as at least 500, especially 800 to 1,800 are preferred, because of less volatility and more retention, in that long-term recovery is exerted. It is noted that the molecular weight may be determined as weight average molecular weight (Mw) by GPC analysis versus polystyrene standards using THF as developing solvent.

On the other hand, the inorganic antioxidant used herein may be selected from among cerium oxide, cerium oxide/zirconia solid solution (zirconia/ceria solid solution), cerium hydroxide, carbon, carbon nanotubes, titanium oxide, fullerene, etc.

In order that a heat-dissipating sheet heavily loaded with a filler exert long-term recovery, cerium species including cerium oxide, cerium oxide/zirconia solid solution, and cerium hydroxide are especially preferred. Also, zirconia/ceria solid solution (i.e., zirconium oxide ($ZrO_2$)/cerium oxide ($CeO_2$) solid solution) wherein ceria forms a solid solution with zirconia is effective for improving the oxygen storage capacity over cerium oxide alone.

When the zirconia/ceria solid solution is used, the content of zirconium oxide ($ZrO_2$) in the solid solution is preferably 5 to 95 mol%, more preferably 10 to 85 mol%, and even more preferably 25 to 80 mol% whereas the content of cerium oxide ($CeO_2$) in the solid solution is preferably 95 to 5 mol%, more preferably 90 to 15 mol%, and even more preferably 75 to 20 mol%. Notably, this content may be identified by XRD or similar analysis.

The inorganic antioxidant is preferably in the form of fine powder having an average particle size of up to 50 μm, more preferably 0.05 to 20 μm, and even more preferably 0.1 to 15 μm. If the average particle size is too large, there is a possibility that the heat-dissipating sheet loses strength.

The organic antioxidants and inorganic antioxidants may be used alone or in combination.

The total amount of component (e) added is 0.1 to 10 parts by weight, preferably 0.5 to 5 parts by weight per 100 parts by weight of the organopolysiloxane as component (a). Less than 0.1 part by weight of component (e) is insufficient to exert the effect of improving recovery, especially long-term recovery. If the amount exceeds 10 parts by weight, the heat-dissipating sheet may have a substantial increase of hardness, indicating a substantial loss of recovery because a low Si-H/Si-Vi ratio must be achieved by reducing the amount of organohydrogenpolysiloxane added.

[(f) Surface treating agent]

The inventive composition may further comprise (f) a dimethylpolysiloxane blocked at a single end with a trialkoxysilyl group. Component (f) serves as a surface treating agent and is preferably a compound having the general formula (3).

[Chemical Formula 7]

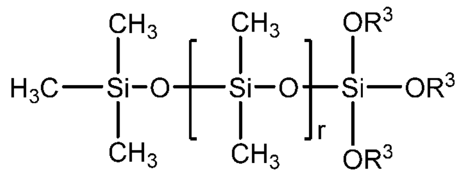

(3)

Herein $R^3$ is independently an alkyl group of 1 to 6 carbon atoms, such as methyl, ethyl, propyl, isopropyl, butyl, isobutyl, tert-butyl, pentyl, neopentyl and hexyl, and r is an integer of 5 to 200, preferably 30 to 100.

When used, the dimethylpolysiloxane blocked at a single end with a trialkoxysilyl group is preferably added in an amount of 0.1 to 40 parts by weight, more preferably 5 to 20 parts by weight per 100 parts by weight of component (a). As the proportion of component (f) increases, there arises a possibility of inducing oil separation.

Additionally, various additives may be added to the inventive composition in effective amounts, for example, reaction inhibitors for adjusting a curing rate, pigments and dyes for coloration, flame retardants, internal parting agents for facilitating release from molds or separator film, and plasticizers for adjusting the viscosity of the composition or the hardness of molded articles.

Examples of the reaction inhibitor and plasticizer are given below although the invention is not limited thereto.

[Reaction inhibitor]

As the reaction inhibitor, any well-known addition reaction inhibitors used in conventional addition reaction-curable silicone compositions may be used. Examples include acetylene compounds such as 1-ethynyl-1-hexanol and 3-butyn-1-ol, various nitrogen compounds, organic phosphorus compounds, oxime compounds, and organic chloro compounds. The amount of the inhibitor used is desirably 0.01 to 1 part by weight, more desirably 0.05 to 0.5 part by weight per 100 parts by weight of component (a).

[Plasticizer]

Exemplary of the plasticizer is a dimethylpolysiloxane having the general formula (4):

[Chemical Formula 8]

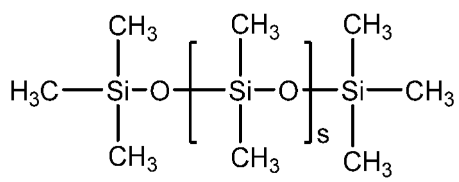

(4)

wherein s is an integer of 1 to 200, preferably 10 to 100.

The amount of the plasticizer used is desirably 1 to 30 parts by weight, more desirably 5 to 15 parts by weight per 100 parts by weight of component (a).

[Curing conditions]

The curing conditions under which the composition is molded may be the same as used for well-known addition reaction-curable silicone rubber compositions. Although the composition fully cures even at normal temperature, for example, it may be heated if necessary. The heating conditions preferably include 100 to 180°C, especially 110 to 150°C

and 5 to 30 minutes, especially 10 to 20 minutes. For example, heating at 120°C for 10 minutes may complete addition cure. This may be preferably followed by secondary cure (or post-cure) at 100 to 200°C, especially 130 to 170°C for 1 to 10 hours, especially 3 to 7 hours.

The molded article thus obtained has a low hardness sufficient to deform in conformity with the shape of a member to be heat dissipated and good thermal conduction so that it may exert satisfactory heat dissipating properties without applying any stress to the member. In addition, the molded article is good in handling and reworking, and has long-term recovery, and is thus useful in the heat-dissipating application of vehicle-mounted parts.

[Hardness of molded article]

The molded article of the inventive composition should preferably have a hardness of up to 30, more preferably up to 25, and even more preferably up to 20, as measured at 25°C by an Asker C hardness meter according to SRISO101. If the hardness exceeds 30, the molded article may become difficult to deform in conformity with the shape of a member to be heat dissipated and to exhibit good heat dissipating properties without applying any stress to the member.

In order that the molded article have a hardness in the range, preferably an appropriate amount of component (b) is formulated in the composition.

[Thermal conductivity of molded article]

The molded article of the inventive composition should preferably have a thermal conductivity of at least 1.0 W/m·K, more preferably at least 1.5 W/m·K as measured at 25°C by the hot disk method. If the thermal conductivity is less than 1.0 W/m·K, it may be inhibitory to apply the molded article to a heat-generating member having a high heat release.

In order that the molded article have a thermal conductivity in the range, preferably the above-specified amount of the thermally conductive filler is formulated in the composition.

## EXAMPLES

Examples and Comparative Examples are given below by way of illustration although the invention is not limited to the following Examples.

Components (a) to (f) used in Examples and Comparative Examples are identified below.

Component (a):

Dimethyl-methylvinylpolysiloxanes blocked with methyl at both ends of the molecular chain and having vinyl in molecular side chains, represented by the following formula (I)

[Chemical Formula 9]

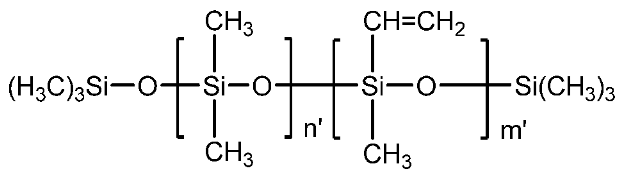

(I)

In formula (I), n’ and m’ are as follows.

(a-1) average DOP: n’+m’=300,
average number of side chain vinyl: m’=2

(a-2) average DOP: n’+m’=240,
average number of side chain vinyl: m’=2

(a-3) average DOP: n’+m’=300,
average number of side chain vinyl: m’=5

(a-4) average DOP: n’+m’=300,

average number of side chain vinyl: m'=9

Component (b):

Dimethylhydrogenpolysiloxanes blocked with hydrogen at both ends, represented by the following formula (II)

[Chemical Formula 10]

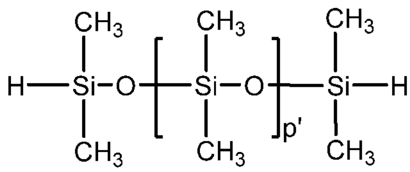

(II)

In formula (II), p' is as follows.

(b-1) average DOP: p'=18

(b-2) average DOP: p'=58

(b-3) average DOP: p'=80

(b-4) average DOP: p'=100

Component (c):

Thermally conductive fillers having an average particle size as shown below

(c-1) aluminum oxide with an average particle size of 1 μm

(c-2) aluminum hydroxide with an average particle size of 10 μm

(c-3) aluminum oxide with an average particle size of 50 μm

(c-4) aluminum oxide with an average particle size of 70 μm

Component (d):

5 wt% chloroplatinic acid in 2-ethylhexanol

Component (e):

(e-1) IRGANOX 1330 (BASF, hindered phenol base antioxidant, Mw=775.2)

(e-2) AO-60G (Adeka Corp., hindered phenol base antioxidant, Mw=1,178.5)

(e-3) cerium oxide (average particle size 0.18 μm)

(e-4) zirconia/ceria solid solution (average particle size 11 μm, ceria/zirconia ratio (compositional ratio) 75/25)

(e-5) cerium hydroxide (average particle size 0.20 μm)

Component (f):

Dimethylpolysiloxane blocked at a single end with trimethoxysilyl and having an average DOP of 30, represented

by the following formula (III)

[Chemical Formula 11]

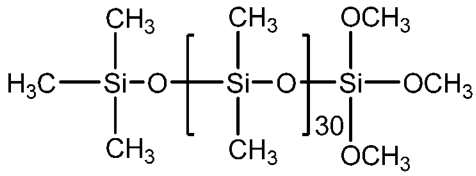

(III)

Component (g):

Ethynyl methylidene carbinol as addition reaction inhibitor

Component (h):

Dimethylpolysiloxane as plasticizer, represented by the following formula (IV)

[Chemical Formula 12]

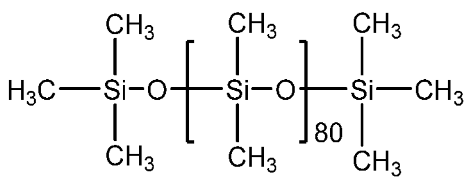

(IV)

[Examples 1 to 8 and Comparative Examples 1 to 8]

Compositions were prepared by the following preparation method using predetermined amounts of components (a) to (h), sheets were fabricated by curing the compositions according to the following molding method, and the sheets were measured for hardness, thermal conductivity, recovery rate, and thermal resistance according to the following evaluation methods. In Examples 5 to 8 and Comparative Examples 2, 5, 6 and 8, the molded sheets were post-cured under the following conditions.

[Composition preparation method]

Components (a), (c), (e), (f) and (h) identified above were admitted in the predetermined amounts shown as Examples 1 to 8 and Comparative Examples 1 to 8 in Tables 1 and 2, and kneaded for 60 minutes on a planetary mixer. To the mix, components (d) and (g) were added in the predetermined amounts shown as Examples 1 to 8 and Comparative Examples 1 to 8 in Tables 1 and 2, an effective amount of an internal parting agent for facilitating release from the separator was added, and the contents were further kneaded for 30 minutes. Further component (b) was added thereto in the predetermined amount shown as Examples 1 to 8 and Comparative Examples 1 to 8 in Tables 1 and 2. Further kneading for 30 minutes yielded the composition.

[Molding method]

The composition thus obtained was cast into a mold of 60 mm × 60 mm × 6 mm and molded at 120°C for 10 minutes on a press molding machine.

[Post-cure]

In Examples 5 to 8 and Comparative Examples 2, 5, 6 and 8, post-cure was carried out by heating the molded products in sheet form in a heating oven at 150°C for 5 hours.

[Evaluation methods]

Hardness:

Each of the compositions of Examples 1 to 8 and Comparative Examples 1 to 8 was cured into a sheet of 6 mm thick, and two sheets were laid one on another. On measurement by Asker C hardness meter, a hardness value taken after 10 seconds from the start of measurement was reported. The results are shown in Tables 1 and 2.

Thermal conductivity:

Each of the compositions of Examples 1 to 8 and Comparative Examples 1 to 8 was cured into a sheet of 6 mm thick. Two sheets were used to measure a thermal conductivity by a thermal conductivity meter TPA-501 (trade name of Kyoto Electronics Mfg. Co., Ltd.). The results are shown in Tables 1 and 2.

Recovery rate:

Each of the compositions of Examples 1 to 8 and Comparative Examples 1 to 8 was pressed and cured at 110°C for 10 minutes into a sheet of 3 mm thick. The thickness of the sheet was measured and reported as thickness as molded. The sheet was punched into a sample of 20 mm squares. The sample was sandwiched between polyimide films, compressed 50%, and aged at 150°C for 50 hours and 500 hours. After aging, the sample was allowed to resume room temperature and then the compression was relieved. The thickness of the sample was measured after 60 minutes and reported as thickness after recovery. A recovery rate was computed as (thickness after recovery)/(thickness as molded)x100. The results are shown in Tables 1 and 2.

Thermal resistance

The molded product in sheet form in Example 5 or Comparative Example 5 was sandwiched between aluminum plates, compressed about 50% using spacers, and aged in the compressed state at 150°C for 500 hours. After aging, the sheet was allowed to resume room temperature and then measured for thermal resistance (ASTM D5470) in the compressed state. Example 5 marking a recovery rate of 54% had a thermal resistance of 1.00 whereas Comparative Example 5 marking a recovery rate of 51% had a thermal resistance of 1.40. It is believed that because of poor recovery, the sheet of Comparative Example 5 degraded its adhesion to the aluminum plates with the lapse of time and thus underwent an increase of contact thermal resistance.

[Table 1]

| Components of composition (pbw) | | Example | | | | | | | |
|---|---|---|---|---|---|---|---|---|---|
| | | 1 | 2 | 3 | 4 | 5 | 6 | 7 | 8 |
| (a) | (a-1) | 100 | 100 | - | - | - | - | - | - |
| | (a-2) | - | - | 100 | 100 | - | - | - | - |
| | (a-3) | - | - | - | - | 100 | 100 | - | - |
| | (a-4) | - | - | - | - | - | - | 100 | 100 |
| (b) | (b-1) | - | - | - | - | - | - | 35 | - |
| | (b-2) | - | - | - | - | 15 | - | - | 28 |
| | (b-3) | 20 | - | 18 | - | - | 22 | - | - |
| | (b-4) | - | 33 | - | 24 | - | - | - | - |
| (b)Si-H/(a)Si-Vi | | 0.95 | 1.06 | 0.92 | 0.98 | 0.87 | 0.97 | 1.10 | 1.02 |
| (c) | (c-1) | 200 | 100 | 100 | 100 | 200 | 200 | 100 | 100 |
| | (c-2) | 200 | 200 | 200 | 200 | 200 | 200 | 100 | 200 |
| | (c-3) | 300 | 400 | 400 | 400 | 300 | 300 | 100 | 200 |
| | (c-4) | - | - | - | - | - | - | 400 | 200 |

(continued)

| Components of composition (pbw) | | Example | | | | | | | |
|---|---|---|---|---|---|---|---|---|---|
| | | 1 | 2 | 3 | 4 | 5 | 6 | 7 | 8 |
| Total of (c) | | 700 | 700 | 700 | 700 | 700 | 700 | 700 | 700 |
| (d) | | 0.6 | 0.6 | 0.6 | 0.6 | 0.6 | 0.6 | 0.6 | 0.6 |
| (e) | (e-1) | - | - | 2.0 | - | - | - | 1.5 | - |
| | (e-2) | - | - | - | - | 4.0 | - | - | 0.8 |
| | (e-3) | 0.2 | 0.3 | - | 0.6 | 4.0 | - | - | - |
| | (e-4) | - | 0.2 | - | 0.4 | - | 3.0 | 0.5 | - |
| | (e-5) | - | - | - | 0.5 | - | - | - | 0.8 |
| Total of (e) | | 0.2 | 0.5 | 2.0 | 1.5 | 7.0 | 3.0 | 2.0 | 1.6 |
| (f) | | 20 | 10 | 15 | 5 | 10 | 5 | 10 | 10 |
| (g) | | 0.05 | 0.05 | 0.05 | 0.05 | 0.05 | 0.05 | 0.05 | 0.05 |
| (h) | | 5 | 5 | 5 | 5 | 5 | 5 | 5 | 5 |
| L'/L | | 0.80 | 1.00 | 1.00 | 1.25 | 1.16 | 1.60 | 0.60 | 1.93 |
| Post-cure | | no | no | no | no | yes | yes | yes | yes |
| Evaluation results | | | | | | | | | |
| Hardness (Asker C) | | 18 | 25 | 10 | 16 | 7 | 5 | 22 | 28 |
| Thermal conductivity (W/m·K) | | 2.2 | 1.9 | 2.5 | 2.8 | 2.6 | 3.3 | 2.7 | 2.3 |
| Recovery rate after 50 hr aging (%) | | 57 | 56 | 57 | 56 | 57 | 61 | 62 | 59 |
| Recovery rate after 500 hr aging (%) | | 55 | 54.5 | 55 | 54.5 | 54 | 58 | 60 | 57.5 |

[Table 2]

| Components of composition (pbw) | | Comparative Example | | | | | | | |
|---|---|---|---|---|---|---|---|---|---|
| | | 1 | 2 | 3 | 4 | 5 | 6 | 7 | 8 |
| (a) | (a-1) | 100 | - | 100 | 100 | - | - | - | - |
| | (a-2) | - | - | - | - | 100 | - | - | - |
| | (a-3) | - | - | - | - | - | 100 | - | - |
| | (a-4) | - | 100 | - | - | - | - | 100 | 100 |
| (b) | (b-1) | 15 | - | - | - | - | - | 7 | - |
| | (b-2) | - | - | - | - | - | - | - | 6 |
| | (b-3) | - | - | 18 | - | 15 | 10 | - | - |
| | (b-4) | - | 12 | - | 24 | - | - | - | - |
| (b)Si-H/(a)Si-Vi | | 0.88 | 0.80 | 0.90 | 0.97 | 0.85 | 0.71 | 0.70 | 0.68 |
| (c) | (c-1) | 200 | 100 | 100 | 100 | 200 | 200 | 100 | 100 |
| | (c-2) | 200 | 200 | 200 | 200 | 200 | 200 | 100 | 200 |
| | (c-3) | 300 | 400 | 400 | 400 | 300 | 300 | 100 | 200 |
| | (c-4) | - | - | - | - | - | - | 400 | 200 |

(continued)

| Components of composition (pbw) | | Comparative Example | | | | | | | |
|---|---|---|---|---|---|---|---|---|---|
| | | 1 | 2 | 3 | 4 | 5 | 6 | 7 | 8 |
| Total of (c) | | 700 | 700 | 700 | 700 | 700 | 700 | 700 | 700 |
| (d) | | 0.6 | 0.6 | 0.6 | 0.6 | 0.6 | 0.6 | 0.6 | 0.6 |
| (e) | (e-1) | - | 0.6 | - | 0.01 | - | - | 3 | - |
| | (e-2) | - | - | - | - | - | 8 | - | - |
| | (e-3) | - | - | - | 0.01 | - | 3 | - | 8 |
| | (e-4) | - | 0.4 | - | 0.03 | 0.05 | - | 12 | 9 |
| | (e-5) | - | - | - | - | 0.03 | - | - | - |
| Total of (e) | | 0.0 | 1.0 | 0.0 | 0.05 | 0.08 | 11 | 15 | 17 |
| (f) | | 10 | 15 | 20 | 20 | 10 | 5 | 5 | 10 |
| (g) | | 0.05 | 0.05 | 0.05 | 0.05 | 0.05 | 0.05 | 0.05 | 0.05 |
| (h) | | 5 | 5 | 5 | 5 | 5 | 5 | 5 | 5 |
| L'/L | | 0.18 | 3.33 | 0.80 | 1.00 | 1.00 | 1.60 | 0.60 | 1.93 |
| Post-cure | | no | yes | no | no | yes | yes | no | yes |
| Evaluation results | | | | | | | | | |
| Hardness (Asker C) | | 8 | 5 | 12 | 17 | 8 | 5 | 22 | 28 |
| Thermal conductivity (W/m·K) | | 2.8 | 2.7 | 2.3 | 1.8 | 2.5 | 3.5 | 3.1 | 2.8 |
| Recovery rate after 50 hr aging (%) | | 51 | 52.5 | 59 | 57 | 58 | 53 | 52 | 53 |
| Recovery rate after 500 hr aging (%) | | 50 | 50.5 | 51 | 51.5 | 51 | 51 | 50.5 | 51 |

As evident from the results in Tables 1 and 2, Comparative Examples 1 and 2 having a L'/L value outside the range of 0.6 to 2.3 showed a drop of recovery at the time of 50 hours even though an appropriate amount of the antioxidant was added. Comparative Examples 3, 4 and 5, in which the amount of antioxidant (e) added was less than 0.1 part by weight per 100 parts by weight of component (a), showed a good recovery at 50 hours, but a substantial drop of recovery after 500 hours. Comparative Examples 6, 7 and 8 showed a substantial increase of sheet hardness because the amount of antioxidant (e) exceeded 10 parts by weight per 100 parts by weight of component (a), and a drop of recovery rate as compared with Examples 6, 7 and 8 because the amount of component (b) added was reduced to provide a low Si-H/Si-Vi ratio. If the sheet has a high hardness, its compressibility becomes poor and its contact thermal resistance increases. Examples 1 to 8 showed satisfactory results of recovery both after 50 hours and 500 hours because the L'/L value was in the range of 0.6 to 2.3 and the total amount of antioxidant (e) was in the range of 0.1 to 10 parts by weight per 100 parts by weight of component (a).

## Claims

**1.** A thermally conductive silicone composition comprising:

(a) 100 parts by weight of an organopolysiloxane having silicon-bonded alkenyl groups in at least molecular side chains, the number of alkenyl groups in molecular side chains being 2 to 9,
(b) an organohydrogenpolysiloxane which is blocked on at least both ends with a silicon-bonded hydrogen atom, in such an amount that the molar amount of silicon-bonded hydrogen atoms in component (b) is 0.1 to 2.0 times the molar amount of alkenyl groups in component (a),
(c) 200 to 2,500 parts by weight of a thermally conductive filler,
(d) a platinum group metal-based curing catalyst in such an amount as to give 0.1 to 1,000 ppm of platinum

group metal based on the weight of component (a), and
(e) 0.1 to 10 parts by weight of an antioxidant which is an organic antioxidant and/or an inorganic antioxidant,

the composition meeting L'/L = 0.6 to 2.3 wherein L represents the average number of siloxane bonds between the silicon atoms having alkenyl groups directly bonded thereto in molecular side chains in the organopolysiloxane as component (a), and L' represents the average degree of polymerization of the organohydrogenpolysiloxane as component (b).

2. The thermally conductive silicone composition of claim 1 wherein the organic antioxidant is an antioxidant having a hindered phenol skeleton.

3. The thermally conductive silicone composition of claim 2 wherein the antioxidant having a hindered phenol skeleton is a compound having a molecular weight of at least 500.

4. The thermally conductive silicone composition of claim 1 wherein the inorganic antioxidant is selected from the group consisting of cerium oxide, cerium oxide/zirconia solid solution, cerium hydroxide, carbon, carbon nanotubes, titanium oxide, and fullerene.

5. The thermally conductive silicone composition of any one of claims 1 to 4 wherein component (a) is an organopolysiloxane having the general formula (1):

[Chemical Formula 1]

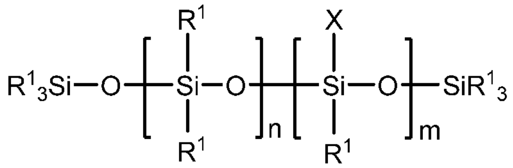

(1)

wherein $R^1$ is independently a substituted or unsubstituted monovalent hydrocarbon group free of aliphatic unsaturation, X is an alkenyl group, n is 0 or an integer of at least 1, and m is an integer of 2 to 9.

6. The thermally conductive silicone composition of any one of claims 1 to 5 wherein component (b) is an organohydrogenpolysiloxane having the average structural formula (2):

[Chemical Formula 2]

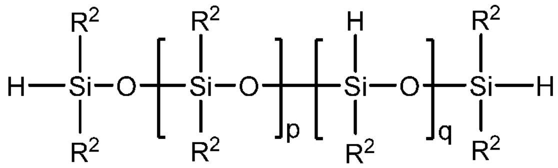

(2)

wherein $R^2$ is independently a substituted or unsubstituted monovalent hydrocarbon group free of aliphatic unsaturation, p is a positive number of at least 0, and q is a positive number of 0 to less than 2.

7. The thermally conductive silicone composition of any one of claims 1 to 6, further comprising (f) 0.1 to 40 parts by weight of a dimethylpolysiloxane which is blocked at a single end with a trialkoxysilyl group, per 100 parts by weight of component (a).

8. The thermally conductive silicone composition of any one of claims 1 to 7 which cures into a cured product having a thermal conductivity of at least 1.0 W/m·K.

9. A thermally conductive silicone molded article obtained by molding the composition of any one of claims 1 to 8 into

a sheet.

10. The thermally conductive silicone molded article of claim 9 which is obtained from secondary curing of the silicone article molded into a sheet.

11. The thermally conductive silicone molded article of claim 9 or 10, having a hardness of up to 30 on Asker C hardness meter.

## Patentansprüche

1. Thermisch leitfähige Silikonzusammensetzung, umfassend:

(a) 100 Gewichtsteile eines Organopolysiloxans, das Silizium-gebundene Alkenylgruppen in mindestens Molekülseitenketten aufweist, wobei die Anzahl von Alkenylgruppen in Molekülseitenketten 2 bis 9 beträgt,
(b) ein Organohydrogenpolysiloxan, das an mindestens beiden Enden mit einem Silizium-gebundenen Wasserstoffatom blockiert ist, in solch einer Menge, dass die molare Menge an Silizium-gebundenen Wasserstoffatomen in Komponente (b) das 0,1 bis 2,0-fache der molaren Menge an Alkenylgruppen in Komponente (a) beträgt,
(c) 200 bis 2.500 Gewichtsteile eines thermisch leitfähigen Füllstoffs,
(d) einen Platingruppenmetall-basierten Härtungskatalysator in solch einer Menge, um 0,1 bis 1.000 ppm Platingruppenmetall vorzusehen, basierend auf dem Gewicht der Komponente (a) und
(e) 0,1 bis 10 Gewichtsteile eines Antioxidans, das ein organisches Antioxidans und/oder ein anorganisches Antioxidans ist,

wobei die Zusammensetzung L'/L = 0,6 bis 2,3 genügt, worin L die durchschnittliche Zahl an Siloxanbindungen zwischen den Siliziumatomen mit direkt daran gebundenen Alkenylgruppen in Molekülseitenketten in dem Organopolysiloxan als Komponente (a) wiedergibt, und L' den durchschnittlichen Polymerisationsgrad des Organohydrogenpolysiloxans als Komponente (b) wiedergibt.

2. Thermisch leitfähige Silikonzusammensetzung nach Anspruch 1, wobei das organische Antioxidans ein Antioxidans mit einem gehinderten Phenolgerüst ist.

3. Thermisch leitfähige Silikonzusammensetzung nach Anspruch 2, wobei das Antioxidans mit einem gehinderten Phenolgerüst eine Verbindung mit einem Molekulargewicht von mindestens 500 ist.

4. Thermisch leitfähige Silikonzusammensetzung nach Anspruch 1, wobei das anorganische Antioxidans gewählt ist aus der Gruppe, bestehend aus Ceroxid, Ceroxid/Zirconoxid-Feststofflösung, Cerhydroxid, Kohlenstoff, Kohlenstoffnanotubes, Titanoxid und Fulleren.

5. Thermisch leitfähige Silikonzusammensetzung nach irgendeinem der Ansprüche 1 bis 4, wobei Komponente (a) ein Organopolysiloxan der allgemeinen Formel (1) ist:

[Chemisch Formel 1]

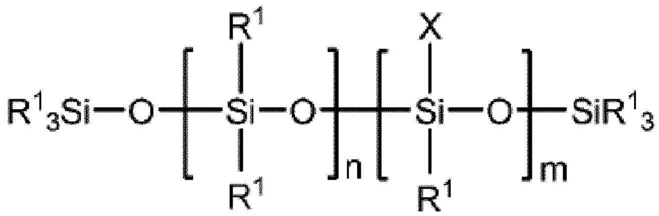

(1)

worin $R^1$ unabhängig eine an aliphatischer Ungesättigtheit freie, substituierte oder unsubstituierte, einwertige Kohlenwasserstoffgruppe ist, X eine Alkenylgruppe ist, n 0 oder eine ganze Zahl von mindestens 1 ist, und m eine ganze Zahl von 2 bis 9 ist.

6. Thermisch leitfähige Silikonzusammensetzung nach irgendeinem der Ansprüche 1 bis 5, wobei Komponente (b) ein Organohydrogenpolysiloxan der durchschnittlichen Strukturformel (2) ist:

[Chemische Formel 2]

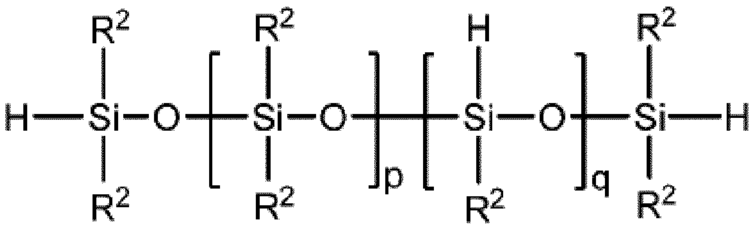

(2)

worin $R^2$ unabhängig eine an aliphatischer Ungesättigtheit freie, substituierte oder unsubstituierte, einwertige Kohlenwasserstoffgruppe ist, p eine positive Zahl von mindestens 0 ist, und q eine positive Zahl von 0 bis weniger als 2 ist.

7. Thermisch leitfähige Silikonzusammensetzung nach irgendeinem der Ansprüche 1 bis 6, weiterhin umfassend (f) 0,1 bis 40 Gewichtsteile eines Dimethylpolysiloxans, das an einem einzelnen Ende mit einer Trialkoxysilylgruppe blockiert ist, pro 100 Gewichtsteile an Komponente (a).

8. Thermisch leitfähige Silikonzusammensetzung nach irgendeinem der Ansprüche 1 bis 7, das zu einem gehärteten Produkt mit einer thermischen Leitfähigkeit von mindestens 1,0 W/m · K härtet.

9. Thermisch leitfähiger Silikonformartikel, erhalten durch Formen der Zusammensetzung nach irgendeinem der Ansprüche 1 bis 8 zu einer Folie.

10. Thermisch leitfähiger Silikonformartikel nach Anspruch 9, welcher erhalten wird aus einer sekundären Härtung des zu einer Folie geformten Silikonartikels.

11. Thermisch leitfähiger Silikonformartikel nach Anspruch 9 oder 10 mit einer Härte von bis zu 30 auf einem Asker C Härtemessgerät.

**Revendications**

1. Une composition de silicone thermoconductrice comprenant:

(a) 100 parties en poids d'un organopolysiloxane ayant des groupes alcényle liés au silicium dans au moins des chaînes latérales moléculaires, le nombre de groupes alcényle dans les chaînes latérales moléculaires étant de 2 à 9,
(b) un organohydrogénopolysiloxane qui est bloqué au moins aux deux extrémités par un atome d'hydrogène lié au silicium, en une quantité telle que la quantité molaire d'atomes d'hydrogène liés au silicium dans le composant (b) soit 0,1 à 2,0 fois la quantité molaire de groupes alcényle dans le composant (a),
(c) 200 à 2.500 parties en poids d'une charge thermoconductrice,
(d) un catalyseur de durcissement à base de métal du groupe du platine en une quantité telle qu'il donne 0,1 à 1 000 ppm de métal du groupe du platine par rapport au poids du composant (a) et
(e) 0,1 à 10 parties en poids d'un antioxydant qui est un antioxydant organique et / ou un antioxydant inorganique,

la composition correspondant à L' / L = 0,6 à 2,3, L représentant le nombre moyen de liaisons siloxane entre les atomes de silicium ayant des groupes alcényle directement liés à ceux-ci dans des chaînes moléculaires latérales dans l'organopolysiloxane en tant que composant (a), et L' représentant le degré moyen de polymérisation de l'organohydrogénopolysiloxane en tant que composant (b).

2. La composition de silicone thermoconductrice selon la revendication 1, dans laquelle l'antioxydant organique est un antioxydant ayant un squelette en phénol encombré.

3. La composition de silicone thermoconductrice selon la revendication 2, dans laquelle l'antioxydant ayant un squelette phénolique encombré est un composé ayant un poids moléculaire d'au moins 500.

4. La composition de silicone thermoconductrice selon la revendication 1, dans laquelle l'antioxydant inorganique est choisi parmi le groupe constitué par l'oxyde de cérium, la solution solide oxyde de cérium / zircone, l'hydroxyde de cérium, le carbone, les nanotubes de carbone, l'oxyde de titane et le fullerène.

5. La composition de silicone thermoconductrice selon l'une quelconque des revendications 1 à 4, dans laquelle le composant (a) est un organopolysiloxane répondant à la formule générale (1):

[formule chimique 1]

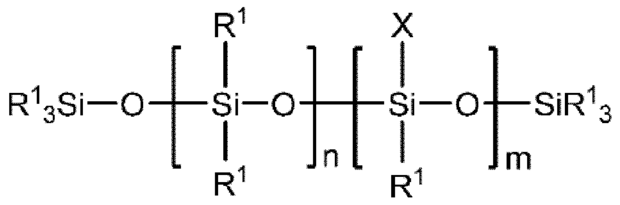

(1)

dans laquelle $R^1$ est indépendamment un groupe hydrocarboné monovalent substitué ou non substitué exempt d'insaturation aliphatique, X est un groupe alcényle, n est égal à 0 ou à un nombre entier égal à au moins 1 et m est un nombre entier compris entre 2 et 9.

6. La composition de silicone thermoconductrice selon l'une quelconque des revendications 1 à 5, dans laquelle le composant (b) est un organohydrogène polysiloxane ayant la formule développée moyenne (2):

[formule chimique 2]

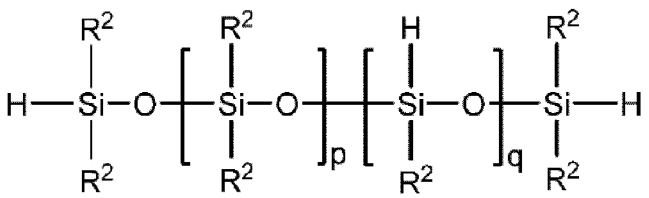

(2)

dans laquelle $R^2$ est indépendamment un groupe hydrocarboné monovalent substitué ou non substitué exempt d'insaturation aliphatique, p est un nombre positif d'au moins 0 et q est un nombre positif de 0 à moins de 2.

7. La composition de silicone thermoconductrice selon l'une quelconque des revendications 1 à 6, comprenant en outre (f) 0,1 à 40 parties en poids d'un diméthylpolysiloxane qui est bloqué à une seule extrémité avec un groupe trialkoxysilyle, pour 100 parties en poids du composant (a).

8. La composition de silicone thermoconductrice selon l'une quelconque des revendications 1 à 7, qui durcit en un produit durci ayant une conductivité thermique d'au moins 1,0 W/m·K.

9. Un article moulé en silicone thermoconducteur obtenu par moulage de la composition selon l'une quelconque des revendications 1 à 8 en une feuille.

10. L'article moulé en silicone thermoconducteur selon la revendication 9, qui est obtenu à partir d'un durcissement secondaire de l'article en silicone moulé en une feuille.

11. L'article moulé en silicone thermoconducteur selon la revendication 9 ou 10, ayant une dureté allant jusqu'à 30 sur un duromètre de type Asker C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011016923 A
- JP H1160955 A
- JP 2000212444 A
- JP 2002179917 A
- US P3220972 A
- US P3159601 A
- US 3159662 A
- US 3775452 A